(19) Europäisches Patentamt
European Patent Office
Office européen des brevets

(11) Publication number: **0 096 222**
**A2**

(12) # EUROPEAN PATENT APPLICATION

(21) Application number: 83104461.5

(22) Date of filing: 06.05.83

(51) Int. Cl.³: C 08 J 9/14
C 08 G 18/76, C 08 G 18/14
C 08 G 18/22, C 08 J 5/04

(30) Priority: 03.06.82 US 384684

(43) Date of publication of application:
21.12.83 Bulletin 83/51

(84) Designated Contracting States:
BE DE FR GB IT NL SE

(71) Applicant: THE CELOTEX CORPORATION
1500 North Dale Mabry Highway
Tampa Florida 33607(US)

(72) Inventor: De Leon, Alberto
3176 Heron Place
Clearwater, FL 33516(US)

(72) Inventor: Oliver, John P.
119-60 Avenue South
St. Petersburg, FL 33705(US)

(74) Representative: Rasper, Joachim, Dr.
Bierstadter Höhe 22
D-6200 Wiesbaden(DE)

(54) **Cellular polyisocyanurates produced using a mixture of methylene chloride and a fluorine substituted alkane as the blowing agent.**

(57) Polyisocyanurate foams are prepared by reacting together an organic polyisocyanate, a polyol, a trimerization catalyst, and a blowing agent which comprises a mixture of

(a) methylene chloride and

(b) a fluorocarbon blowing agent selected from the group consisting of halogen-substituted hydrocarbons containing at least one fluorine atom and mixtures of said halogen-substituted hydrocarbons containing at least one fluorine atom, said methylene chloride comprising up to about 40 weight percent of said blowing agent mixture, the remainder of said mixture comprising said fluorocarbon blowing agent. Laminates of such foams exhibit a high degree of fire resistance, low smoke evolution on combustion, low foam friability, good compressive strength and dimensional stability, and high insulation properties.

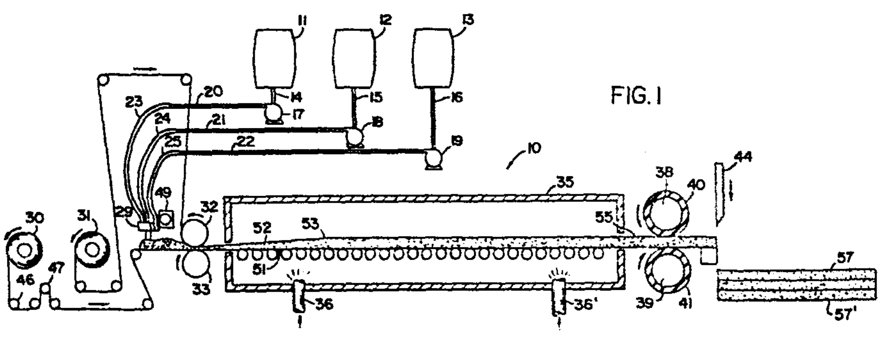


EP 0 096 222 A2

## CELLULAR POLYISOCYANURATES PRODUCED USING A MIXTURE OF METHYLENE CHLORIDE AND A FLUORINE SUBSTITUTED ALKANE AS THE BLOWING AGENT

This invention relates to the manufacture of rigid polyisocyanurate foam by employing as blowing agent a mixture of methylene chloride and a halogen-substituted hydrocarbon containing at least one fluorine-substituted atom, preferably a fluorine substituted alkane.

It is well known in the manufacture of polyisocyanurate foams to employ chlorofluorohydrocarbons, such as trichlorofluoromethane, as the blowing agent. These chlorofluorocarbon compounds boil or exhibit a significant vapor pressure at ambient temperatures and are volatilized during the exothermic reaction of an isocyanate with an active hydrogen-containing polyol. The expanding gas is entrapped within the reaction mixture and forms a cellular structure. While the foam industry has had good results using these conventional chlorofluorocarbon blowing agents, the agents have come under attack in recent years on the ground that they give rise to environmental problems concerned with ozone depletion in the stratosphere.

The search for alternate blowing agents among other available volatile liquids has met with difficulty because not all such liquids are found to be capable of producing non-friable polyisocyanurate foam materials characterized by good cell structure and little or no

shrinkage. Many of these liquid materials cause expansion of the foam before it has developed sufficiently to contain the volatilized liquid. Other agents are unacceptable because the foams produced shrink after the initial expansion and, eventually, may even collapse. Still another problem with many blowing agents is that they yield foams which exhibit an undesirably high thermal conductivity.

It would accordingly be highly desirable to provide an economically attractive blowing agent whose use would lessen the dependence of the foam industry on fluorocarbon materials and still result in high quality polyisocyanurate foams.

The present invention concerns an economically attractive blowing agent which reduces the use of fluorocarbon materials in isocyanurate foams, and a method of producing the foams by use of the blowing agent.

The present invention also is directed to closed cell polyisocyanurate foam materials of high quality and laminated building panels employing the foam materials.

The present invention also concerns the employment of the blowing agent to produce polyisocyanurate foam materials characterized by excellent cellular formation, low friability, and good compressive strength and dimensional stability.

Further, the present invention is concerned with the production of closed cell polyisocyanurate foam materials with high thermal resistance and high insulation properties and a relatively slow increase in thermal conductivity with time.

The present invention also involves closed cell polyisocyanurate foam materials which can be used in building panels which are highly insulating, thermally resistant, low in friability, soundproof and self-supporting.

According to the present invention there is provided a polyisocyanurate foam which is produced using the blowing agent composition of the present invention which comprises a mixture of methylene chloride and a halogen-substituted hydrocarbon containing at least one fluorine-substituted atom.

The invention particularly relates to a polyisocyanurate foam which is characterized by comprising the reaction product of an organic polyisocyanate, a polyol, a trimerization catalyst, and a blowing agent which comprises a mixture of

(a) methylene chloride and

(b) a fluorocarbon blowing agent selected from the group consisting of halogen-substituted hydrocarbons containing at least one fluorine atom and mixtures of said halogen-substituted hydrocarbons containing at least one fluorine atom, said methylene chloride comprising up to about 40 weight percent of said blowing agent mixture, such as, e.g., from about 10 to 40 weight percent of said mixture, the remainder of said mixture comprising said fluorocarbon blowing agent.

It has been found that the use of this fluid blowing agent composition of the invention, wherein methylene chloride replaces a portion of the conventional halogen-substituted hydrocarbon having at least one fluorine atom, results in closed cell polyisocyanurate foam materials characterized by outstanding properties, including excellent cellular formation, low friability, good dimensional stability, low flammability, and low thermal conductivity.

The fluorocarbon blowing agents suitable for use in combination with methylene chloride in accordance with the instant invention should be inert to all but soluble or dispersible in at least one of the reactants and insoluble in the final polyisocyanurate foam. Among these useful co-blowing agents are the fluorocarbons, chlorofluorocarbons, bromofluorocarbons, and perfluorocarbons. A preferred class of fluorocarbons are the fluorinated alkanes. In general, these blowing agents have an atmospheric pressure boiling point between minus 50 and 100°C. and preferably between zero and 50° C. Examples of suitable blowing agents include, among others, trichlorofluoromethane, monochlorodifluoromethane, dichlorodifluoromethane, trifluoromethane, dichloromonofluoromethane, monochlorotrifluoromethane, tetrafluoromethane, monobromotrifluoromethane, dibromotetrafluoroethane, difluorotetrachloroethane, trichlorotrifluoroethane, dichlorotetrafluoroethane, monochloropentafluoroethane, hexafluoroethane, 1,1-difluoroethane, 1,1,1-trichlorodifluoroethane, octafluorocyclobutane, and the like. Preferred materials from among this group are the chlorofluoroalkanes, particularly dichlorodifluoromethane, trichlorofluoromethane, dichlorotetrafluoroethane,and trichlorotrifluoroethane. Mixtures of fluorocarbon blowing agents can be employed.

The preferred blowing agent of the present invention is a composition comprising a mixture of methylene chloride and a halogen-substituted alkane containing at least one fluorine atom and preferably containing about 1 to 8 carbon atoms. The methylene chloride generally comprises up to about 40 weight percent, preferably about 10 to 40, more preferably about 20 to 30, weight percent, of the blowing agent composition, the remainder of the composition essentially being said halogen-substituted blowing agent containing at least one fluorine atom. An especially preferred blowing agent composition comprises a mixture of methylene chloride and trichlorofluoromethane.

The blowing agent mixture of the invention is employed in an amount sufficient to give the resultant foam the desired bulk density which is generally between 0.5 and 10, and preferably between 1 and 5 pounds per cubic foot (between 0.008 and 0.160, and preferably between 0.016 and 0.080 gm per $cm^3$). The blowing agent

generally comprises from 1 to 30, and preferably comprises from 5 to 20 weight percent of the foam-forming composition of the invention. When the blowing agent has a boiling point at or below ambient, it is maintained under pressure until mixed with the other components. Alternatively, it can be maintained at subambient temperatures until mixed with the other components.

The foam-forming process according to the invention is suitably carried out utilizing the components conventionally employed in the manufacture of polyisocyanurate foams, such as the organic polyisocyanate and polyhydroxyl components, save for the substitution of methylene chloride for a portion of the conventional fluorocarbon blowing agent. The polyisocyanurate foams can be prepared by using standard techniques known to those skilled in the art. Thus, the foams may be prepared simply by mixing together the organic polyisocyanate with the polyol, catalyst and blowing agent at temperatures ranging from about 0° C. to 150° C.

In the broadest aspects of the present invention, any organic polyisocyanate can be employed in the preparation of the foams of the present invention. The organic polyisocyanates which can be used include aromatic, aliphatic and cycloaliphatic polyisocyanates and combinations thereof. Representative of these types are the diisocyanates such as m-phenylene diisocyanate, toluene-2,4-diisocyanate, toluene-2,6-diisocyanate, mixtures of 2,4- and 2,6-toluene diisocyanate, hexamethylene-1, 6-diisocyanate, tetramethylene-1,4-diisocyanate, cyclohexane-1, 4-diisocyanate, hexahydrotoluene 2,4- and 2,6-diisocyanate, naphthalene-1,5-diisocyanate, diphenylmethane-4,4'-diisocyanate, 4,4'-diphenylenediisocyanate, 3,3'-dimethoxy-4,4'-biphenyldiisocyanate, 3,3'-dimethyl-4,4'-biphenyldiisocyanate, and 3,3'-dimethyldiphenylmethane-4,4'-diisocyanate; the triisocyanates such as 4,4',4"-triphenylmethanetriisocyanate, polymethylenepolyphenyl isocyanate, toluene-2,4,6-triisocyanate; and the tetraisocyanates such as 4,4'-dimethyldiphenylmethane-2,2',5,5'-tetraisocyanate. Especially useful are polymethylenepolyphenyl isocyanates. These isocyanates are prepared by conventional methods known in the art such as the phosgenation of the corresponding organic amine.

Any polyol or mixture of polyols heretofore employed in the production of polyisocyanurate foam compositions can be employed in the present invention. These include, for example, monomeric polyols, such as ethylene glycol, the oxyalkylene adducts of polyol bases wherein the oxyalkylene portion is derived from a monomeric unit such as ethylene oxide, propylene oxide, butylene oxide and mixtures thereof. The polyol initiators include ethylene glycol, 1,2-propylene glycol, 1,3-propylene glycol, 1,2-butanediol, 1,4-butanediol, hexanetriol, glycerol, trimethylolpropane, triethylolpropane, pentaerythritol, sorbitol, sucrose, toluene diamine and bisphenol A, polyethers such as polyethylene ether glycols, polypropylene ether glycols, polytetramethylene ether glycols, and alkylene oxide adducts of polyhydric alcohols including those listed above; hydroxy terminated tertiary amines of the formula:

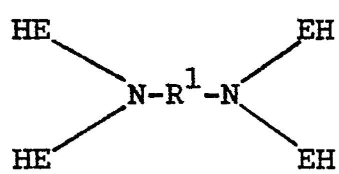

wherein $R^1$ is an alkylene radical containing at least 2 to 6 carbon atoms and E is a polyoxyalkylene chain; amine based polyethers of the formula:

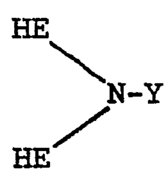

wherein E is a polyoxyalkylene chain and Y is selected from the group consisting of alkyl, hydroxyalkyl and EH; alkylene oxide adducts of acids of phosphorus such as

the adducts prepared by the reaction of phosphoric acid and ethylene oxide, phosphoric acid and propylene oxide, phosphorus acid and propylene oxide, phosphonic acid and ethylene oxide, phosphinic acid and butylene oxide, polyphosphoric acid and propylene oxide and phosphonic acid and styrene oxide.

Typical polyether polyols include polyoxyethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols, and poly-1,4-oxybutylene and polyoxyethylene glycols, and random copolymer glycols prepared from blends or sequential addition of two or more alkylene oxides. Also adducts of the above with trimethylolpropane, glycerine and hexanetriol as well as the polyoxypropylene adducts of higher polyols such as pentaerythritol and sorbitol may be employed. Thus, the polyether polyols which can be employed in the present invention include oxyalkylene polymers which have an oxygen/carbon ratio from about 1:2 to 1:4 and preferably an oxygen carbon atom ratio from about 1:2.8 to 1:4 and from about 2 to 6 terminal hydroxyl groups, preferably about 2 to 4 terminal hydroxyl groups. The polyether polyols generally have an average equivalent weight from about 80 to 10,000 and preferably have an average equivalent weight from about 100 to about 6000. Polyoxypropylene glycols having molecular weights from about 200 to about 4000 corresponding to equivalent weights from about 100 to 2000 and mixtures thereof are particularly useful as polyol reactants. Polyol blends such as a mixture of high molecular weight polyether polyols with lower molecular weight polyether polyols or monomeric polyols can also be employed.

Any suitable hydroxy terminated polyester may also be used. These can be obtained from the reaction of polycarboxylic acids and polyhydric alcohols. Such suitable polycarboxylic acids may be oxalic acid, ma-

lonic acid, succinic acid, glutaric acid, adipic acid, pimelic acid, suberic acid, azelaic acid, sebacic acid, basillic acid, thapsic acid, maleic acid, fumaric acid, glutaconic acid, isophthalic acid and terephthalic acid. Suitable polyhydric alcohols include the following: ethylene glycol, 1,2-propylene glycol, 1,3-propylene glycol, 1,2-butylene glycol, 1,3-butylene glycol, 1,4-butylene glycol, 1,3-pentanediol, 1,4-pentanediol, 1,5-pentanediol, 1,6-hexanediol, 1,4-hexanediol, glycerol, trimethylolpropane, trimethylolethane, hexane 1,2,6-triol, α-methylglucoside, pentaerythritol, sorbitol, sucrose, and compounds derived from phenols such as 2,2-bis(4-hydroxyphenol) propane.

In addition to the above hydroxy-containing compounds, other compounds which may be employed include graft polyols. These polyols are prepared by the in situ polymerization of a vinyl monomer in a reactive polyol medium and in the presence of a free radical initiator. The reaction is generally carried out at a temperature ranging from about 40°C. to 150°C.

In the preferred rigid foam of the invention, the organic polyisocyanate is polymethylene polyphenylisocyanate. The polymethylene polyphenylisocyanates desirably have a functionality of at least 2.1 and preferably 2.5 to 3.8. These preferred polymethylene polyphenylisocyanates generally have an equivalent weight between 120 and 180 and preferably have an equivalent weight between 130 and 145. The friability of foams made with these polyisocyanates is desirably less than 30%, preferably less than 20%.

A preferred subclass of polymethylene polyphenylisocyanates especially useful in the present invention are a mixture of those of the following formula:

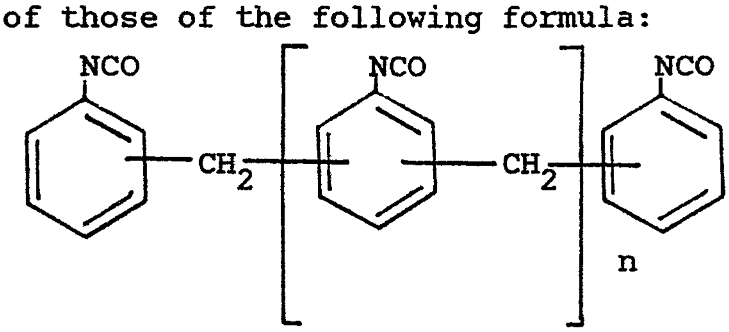

wherein n is an integer from 0 to 8 and wherein the mixture has the above-described functionality and equivalent weight. This mixture should have a viscosity between 100 and 4,000 and preferably 250 to 2500 centipoises measured at 25° C. in order to be practical for use in the present invention.

Examples of suitable polymethylene polyphenylisocyanates useful in the present invention include those of the above formula, wherein n is 1 as well as mixtures wherein n can have any value from 0 to 8 as long as the mixture has the specified equivalent weight. One such mixture has 40 weight percent of n = 0, 22 weight percent of n = 1, 12 weight percent of n = 2, and 26 weight percent of n = 3 to about 8. The synthesis of polymethylene polyphenylisocyanates is described in Seeger et al., U. S. Pat. No. 2,683,730 and in Powers U.S. Pat. No. 3,526,652 at column 3, lines 6-21. It should, therefore, be understood that the polymethylene polyphenylisocyanates available on the market under the tradenames of CODE 047 or PAPI-20 (Upjohn) and MR 200(Mobay) can successfully be employed within the spirit and scope of the present invention.

In the broadest aspects of the present invention, any diol having a low equivalent weight, which is generally between 30 and 100, and preferably between 30 and 75, and having two hydroxyl groups which pass the Zerewitinoff Test, can be employed to react with the polymethylene polyphenylisocyanates described in the three immediately preceding paragraphs to produce preferred rigid foams of the invention. Triols and higher polyols can be admixed with these diols in minor amounts generally less than 40 percent provided the equivalent weight of the mixture is within the specified range. The preferred diols are those of the following formula:

$$HO-R^2-OH$$

wherein $R^2$ is selected from the group consisting of lower alkylene and lower alkoxyalkylene with at least

two carbon atoms. Examples of suitable diols include, among others, ethylene glycol, 1,2-propanediol, 1,3-propanediol, 1,4-butanediol, diethylene glycol, dipropylene glycol, dimethylol dicyclopentadiene, 1,3-cyclohexanediol, and 1,4-cyclohexanediol. Diethylene glycol is preferred since it gives a core of minimum friability and optimum facer sheet adhesion.

In order to ensure complete reaction, the polymethylene polyphenylisocyanate and the diol are generally mixed in an equivalent ratio of 2:1 to 6:1 and preferably 3:1 to 5:1. In ranges outside these proportions the reaction yields a product having undesirable physical characteristics. At higher ratios the product has an undesirably high friability. At lower ratios the product has an undesirably high flammability.

Other desirable polyols for use in the present invention are those described in U. S. Patent Nos. 4,212,917 and 4,237,238, and in European Patent Application No. 82110891.7, filed November 25, 1982, and U. S. application Serial No. 372,904, filed April 29, 1982.

In the preparation of these polyisocyanurate rigid foams, any catalysts known to catalyze the trimerization of isocyanates to form isocyanurates and to catalyze the reaction of isocyanate groups with hydroxyl groups to form polyurethanes, can be employed. The preferred catalysts give cream times of 15 to 30 seconds and firm times of 25 to 80 seconds. One preferred type of catalyst is a mixture of a tertiary amino phenol, such as 2,4,6-tris(dimethylaminomethyl)phenol, and an alkali metal carboxylate, such as potassium-2-ethyl hexoate, the synthesis and use of which are described in U.S. Patent No. 4,169,921. The equivalent ratio of tertiary amino phenol to alkali metal carboxylate in the cocatalyst composition is desirably about .4:1 to 2.5:1. Another catalyst system is that employing an epoxide, an N-substituted aziridine, and a tertiary amine. The synthesis and use of such a catalyst is described in U.S. application

Serial No. 251,279 filed May 8, 1972, now U.S. Pat. No. 3,799,896. The catalysts generally comprise from 0.1 to 20 and preferably from 0.3 to 10 weight percent of the total composition.

Any suitable surfactant can be employed in the foams of this invention. Successful results have been obtained with silicone/ethylene oxide/propylene oxide copolymers as surfactants. Examples of surfactants useful in the present invention include, among others, polydimethylsiloxane-polyoxyalkylene block copolymers available from the Union Carbide Corporation under the trade names "L-5420" and "L-5340" and from the Dow Corning Corporation under the trade name "DC-193". Other suitable surfactants are those described in European Patent Application No. 8210564.6, filed June 25, 1982. Included among the latter surfactants is the product supplied by Jim Walter Resources, Inc. under the trade designation "CGS-100." Generally, the surfactant comprises from about 0.05 to 10, and preferably from 0.1 to 6, weight percent of the foam-forming composition.

Other additives may also be included in the foam formulations. Included are flame retardants, such as tris(2-chloroethyl)-phosphate, dispersing agents, plasticizers, fillers and pigments.

The cellular polyisocyanurate product formed by using the blowing agent mixture of the invention has a uniform, fine-celled structure. Uniformity of cells is determined by visual and microscopic examination.

The average cell size diameter should ideally be less than 0.2 mm and is more preferably less than 0.1 mm (ASTM D-2842). Fine-celled foams can by the means set forth in the invention be rendered closed cells. The blowing agent is then trapped in the cells. One means of expressing the containment in the cells of the blowing agent is by use of the k-factor drift value. Unfaced cellular materials containing fluorocarbon gas have initial k-factors in the vicinity of 0.1-0.2 Btu/hr-°F-sq.

ft. per inch (0.0144-0.0288 W/m °K) at 24°C. This low value increases over a period of months or sometimes days. The change is expressed as the k-factor drift. The k-factor is measured at a mean temperature of 24° C. The value is redetermined at various time intervals up to about 1000 days. A material exhibiting fast k-drift will attain a k-factor of at least 0.2 Btu/hr-°F-sq. ft. per inch (0.0288 W/m °K) within 25 days. A slow k-drift material may require between 200 days and over two years to attain a value of 0.2 Btu/hr-°F-sq. ft. per inch (0.0288 W/m °K). Any material which possesses a k-value under 0.2 Btu/hr-°F-sq. ft. per inch (0.0288 W/m °K) will provide high thermal resistance. Obviously, the longer this value or a lower value is maintained, the better the efficiency.

Ball, Hurd, and Walker have published a comprehensive discussion of k-factor changes as a function of time. ("The Thermal Conductivity of Rigid Urethane Foams", J. Cellular Plastics, March/April, 1970, pp 66-78). F. Norton ("Thermal Conductivity and Life of Polymer Foams", J. Cellular Plastics, January, 1967, pp 23-37) has shown that diffusion of fluorocarbon gases out of unfaced foam and infusion of air into the foam causes an increase in k-factor.

The k-factor for the closed cell foam containing only air falls in the range of 0.22-0.26 BTU/hr-°F.-$ft^2$ per inch thickness (0.0317-0.0374 W/m °K) at 24° C. for the 2-3 $lbs/ft^3$ (0.032-0.048 $gm/cm^3$) density range. Therefore, if a foam exhibits a k-factor greater than 0.2 Btu/hr-°F-sq. ft. per inch (0.0288 W/m °K) after a short period of time (less than 25 days), then substantially all blowing agent has diffused from the foam and has been replaced by air. On the other hand, if the k-factor remains below 0.2 Btu/hr-°F-sq. ft. per inch (0.0288 W/m °K) for at least 100 days, then

a substantial amount of blowing agent gas remains in the closed cells of the foam in spite of infusion of air.

It has been found that use of the blowing agent mixture of the invention results in fine-celled polyisocyanurate foams with a high closed cell content, a low initial k-factor and a low k drift value.

The advantages of the present invention will become more apparent by reference to the following detailed description and drawings wherein:

FIG. 1 is a side schematic representation of an apparatus suitable for producing a cellular foam material in accordance with the present invention;

FIG. 2 is a cross-sectional view of a laminated building panel having one facing sheet; and

FIG. 3 is a cross-sectional view of a laminated building panel having two facing sheets.

Referring now to the drawings, and in particular to Figure 1, there is shown schematically an apparatus 10 suitable for use in connection with the present invention. The apparatus 10 comprises an isocyanate tank 11, a polyol tank 12, and a catalyst tank 13, each respectively connected to outlet lines 14, 15, and 16. The lines 14, 15, and 16 form the inlet to metering pumps 17, 18, and 19. The pumps 17, 18, and 19 discharge respectively through lines 20, 21, and 22 which are in turn respectively connected to flexible lines 23, 24, and 25. The flexible lines 23, 24, and 25 discharge to mixing head 29. The apparatus 10 is also provided with a roll 30 of lower substrate material and a roll 31 of upper substrate material. The apparatus 10 is also provided with metering rolls 32 and 33, and an oven 35 provided with vents 36, 36' for blowing hot air. The apparatus 10 is also provided with pull rolls 38, 39 and cutting knife 44.

In operation, the isocyanate tank 11 is charged with the organic polyisocyanate admixed with the blowing agent mixture and the surfactant, and the polyol tank 12 is charged with the polyol, and the catalyst tank 13 is

charged with the catalyst composition. The speeds of the pumps 17, 18, and 19 are adjusted to give the desired ratios of the ingredients in the tanks 11, 12, and 13. These ingredients pass respectively through lines 20, 21, and 22 as well as lines 23, 24, and 25, whereupon they are mixed in the mixing head 29 and discharged therefrom. Alternatively, lines 21 and 22 can be combined prior to the mixing head. The pull rolls 38, 39, each of which has a flexible outer sheath 40, 41 are caused to rotate in the direction of the arrows by a power source (not shown). By virtue of rotation of the pull rolls 38, 39 lower substrate material is pulled from the roll 30, whereas upper substrate material is pulled from the roll 31. The substrate material passes over idler rollers such as idler rollers 46 and 47 and is directed to the nip between metering rolls 32, 33. The mixing head 29 is caused to move back and forth, i.e. out of the plane of the paper by virtue of its mounting on reversible mechanism 49. In this manner, an even amount of material can be maintained upstream of the nip between the metering rolls 32, 33. The composite structure at this point now comprising a lower substrate 51, an upper substrate 52 on either side of a core 53, now passes into the oven 35. While in the oven 35 the core expands under the influence of heat added by the hot air from vents 36, 36' and due to the heat generated in the exothermic reaction between the polyol and the isocyanate in the presence of the catalyst. The temperature within the oven is controlled by varying the temperature of the hot air from vents 36, 36', in order to insure that the temperature within the oven 35 is maintained within the herein described limits. The composite structure 55 then leaves the oven 35, passes between the nip of the pull rolls 38, 39 and is cut by knife 44 into individual panels 57, 57'.

Numerous modifications to the apparatus 10 will be immediately apparent to those skilled in the art. For

example, the tanks 11, 12, and 13 can be provided with refrigeration means in order to maintain the reactants at subambient temperatures.

Referring to Figure 2 of the drawings, there is shown a laminated building panel 60 of the invention. The building panel 60 comprises a single facing sheet 61 having thereon a cellular material 62 of the present invention. Figure 3 shows a building panel 70 having two facing sheets 71 and 72 on either side of a cellular material 73.

Any facing sheet previously employed to produce building panels can be employed in the present invention. Examples of suitable facing sheets include, among others, those of kraft paper, aluminum, and asphalt impregnated felts, as well as laminates of two or more of the above.

The foam materials of the invention can also be used, with or without a facer(s), for pipe insulation.

The foam materials of the invention can contain various reinforcement materials, such as a quantity of glass fibers, as described in U. S. Patent Nos. 4,118,533 and 4,284,683.

The invention is further illustrated by the following examples in which all parts and percentages are by weight unless otherwise indicated. These non-limiting examples are illustrative of certain embodiments designed to teach those skilled in the art how to practice the invention and to represent the best mode contemplated for carrying out the invention.

EXAMPLE 1

This example illustrates the synthesis of polyisocyanurate foams utilizing as the blowing agent (a) the fluorocarbon monofluorotrichloromethane (R-11) and (b) a series of blowing agent mixtures of the invention having different weight ratios of monofluorotrichloromethane to methylene chloride ($CH_2Cl_2$).

In the preparation of each foam, the following quantities of the following Components A, B and C were combined as indicated.

| Component: | Parts by Weight |
|---|---|
| Component A: | |
| Polyisocyanate | 277 |
| L-5340 | 2.5 |
| Blowing Agent (See Table I below) | |
| Component B: | |
| Diethylene glycol | 23 |
| Component C: | |
| 2,4,6-Tris(dimethylaminomethyl)phenol | 1 |
| Potassium-2-ethyl hexoate | 3 |
| Polyoxyethylene glycol | 8 |

Each foam was prepared using a Hennecke foam metering and dispensing machine. The ingredients of Component A, i.e., the polyisocyanate, surfactant and blowing agent, were premixed together, metered and injected into one side of the high pressure impingement mixing chamber of the machine. The weight percent of R-11 to $CH_2Cl_2$ and quantity of blowing agent used in each foam preparation are presented in Table I. The ingredients of Component C, i.e., the tertiary amino phenol and the solution of potassium-2-ethyl hexoate in the polyoxyethylene glycol, were premixed together in a container. A metered amount of this catalyst mixture, and a metered amount of component B (diethylene glycol) were injected into the other side of the high pressure impingement mixing chamber. Included in Table I are data showing the temperatures of the components injected into the mixing chamber during the foam preparations, as well as data showing pressures and rates of addition for the components. After mixing, all ingredients were dispensed into a 12" x 12" x 6" (30.48 cm x 30.48 cm x 15.24 cm) box, yielding a polyisocyanurate foam. The cream time, firm time, and tack free time of each foam are reported in Table I.

In the above syntheses, the polyisocyanate is a polymethylene polyphenyl isocyanate having an equivalent weight of 138, an acidity of 0.03% HCl, and a viscosity of 2000 centipoises at 25° C. and is available from the

Mobay Chemical Company, Pittsburgh, Pa. under the trade name MONDUR MR-200.

L-5340 is a silicone surfactant available from the Union Carbide Corporation.

The tertiary amino phenol is that supplied by the Rohm & Haas Chemical Company under the trade name DMP-30.

Potassium-2-ethyl hexoate is employed in the form of a 70 weight % solution in the polyoxyethylene glycol, which is sold by the Union Carbide Corporation under the trade name Carbowax 200.

TABLE I

BLOWING AGENT FORMULATIONS AND MACHINE PROCESSING CONDITIONS

| FOAM | A | B | C | D | E | F | G | H |
|---|---|---|---|---|---|---|---|---|
| $R-11/CH_2Cl_2$ (weight ratio) | 100/0 | 100/0 | 100/0 | 90/10 | 90/10 | 90/10 | 80/20 | 80/20 |
| Blowing Agent (parts by weight) | 55.2 | 55.2 | 55.2 | 55.2 | 55.2 | 55.2 | 52 | 52 |
| Component A: | | | | | | | | |
| Temp. (°F) | 58° | 58° | 58° | 57° | 57° | 57° | 58° | 58° |
| (°C) | (14.4°) | (14.4°) | (14.4°) | (13.9°) | (13.9°) | (13.9°) | (14.4°) | (14.4°) |
| Pressure of Addition[1] | 950 | 950 | 950 | 900 | 900 | 900 | 950 | 950 |
| Rate of Addition[2] | 35.92 | 35.92 | 35.92 | 36.11 | 36.11 | 36.11 | 36.20 | 36.20 |
| Component B: | | | | | | | | |
| Temp. (°F) | 74° | 74° | 74° | 60° | 60° | 60° | 62° | 62° |
| (°C) | (23.3°) | (23.3°) | (23.3°) | (15.6°) | (15.6°) | (15.6°) | (16.7°) | (16.7°) |
| Pressure of Addition[1] | 1325 | 1300 | 1300 | 1300 | 1300 | 1300 | 1300 | 1300 |
| Rate of Addition[2] | 2.44 | 2.44 | 2.44 | 2.45 | 2.45 | 2.45 | 2.52 | 2.52 |
| Component C: | | | | | | | | |
| Temp. (°F) | 58° | 58° | 58° | 79° | 79° | 79° | 81° | 81° |
| (°C) | (14.4°) | (14.4°) | (14.4°) | (26.1°) | (26.1°) | (26.1°) | (27.2°) | (27.2°) |
| Pressure of Addition[1] | 1800 | 1800 | 1800 | 1700 | 1700 | 1700 | 1700 | 1700 |
| Rate of Addition[2] | 1.59 | 1.13 | 0.70 | 1.59 | 1.15 | 0.75 | 1.68 | 1.17 |

**TABLE I Continued**

**BLOWING AGENT FORMULATIONS AND MACHINE PROCESSING CONDITIONS**

| FOAM | A | B | C | D | E | F | G | H |
|---|---|---|---|---|---|---|---|---|
| Reactivity | | | | | | | | |
| Cream Time (sec) | 15 | 19 | 28 | 15 | 19 | 29 | 15 | 20 |
| Firm Time (sec) | 28 | 35 | 52 | 29 | 36 | 56 | 26 | 36 |
| Tack Free Time (sec) | 46 | 60 | 108 | 49 | 74 | 137 | 43 | 67 |

| FOAM | I | J | K | L | M | N | O |
|---|---|---|---|---|---|---|---|
| R-11/$CH_2Cl_2$ (weight ratio) | 80/20 | 70/30 | 70/30 | 70/30 | 60/40 | 60/40 | 60/40 |
| Blowing Agent (parts by weight) | 52 | 50 | 50 | 50 | 48 | 48 | 48 |
| Component A: | | | | | | | |
| Temp. (°F) | 58° | 57° | 57° | 57° | 56° | 56° | 56° |
| (°C) | (14.4°) | (13.9°) | (13.9°) | (13.9°) | (13.3°) | (13.3°) | (13.3°) |
| Pressure of Addition[1] | 950 | 950 | 950 | 950 | 950 | 950 | 950 |
| Rate of Addition[2] | 36.20 | 36.08 | 36.08 | 36.08 | 35.67 | 35.67 | 35.67 |
| Component B: | | | | | | | |
| Temp. (°F) | 62° | 60° | 60° | 60° | 58° | 58° | 58° |
| (°C) | (16.7°) | (15.6°) | (15.6°) | (15.6°) | (14.4°) | (14.4°) | (14.4°) |
| Pressure of Addition[1] | 1300 | 1250 | 1250 | 1250 | 1275 | 1275 | 1275 |
| Rate of Addition[2] | 2.52 | 2.51 | 2.51 | 2.51 | 2.51 | 2.51 | 2.51 |

TABLE I Continued

BLOWING AGENT FORMULATIONS AND MACHINE PROCESSING CONDITIONS

| FOAM | I | J | K | L | M | N | O |
|---|---|---|---|---|---|---|---|
| Component C: | | | | | | | |
| Temp. (°F) | 81° | 78° | 78° | 78° | 62° | 62° | 62° |
| (°C) | (27.2°) | (25.6°) | (25.6°) | (25.6°) | (16.7°) | (16.7°) | (16.7°) |
| Pressure of Addition[1] | 1700 | 1690 | 1690 | 1690 | 1800 | 1800 | 1800 |
| Rate of Addition[2] | 0.67 | 1.79 | 1.43 | 0.79 | 1.90 | 1.45 | 0.87 |
| Reactivity | | | | | | | |
| Cream Time (sec) | 30 | 15 | 19 | 30 | 16 | 19 | 30 |
| Firm Time (sec) | 57 | 26 | 33 | 57 | 25 | 30 | 48 |
| Tack Free Time (sec) | 123 | 41 | 59 | 128 | 33 | 46 | 92 |

1. Units = psi (factor x 0.0703 = $kg/cm^2$)
2. Units = lb/min (factor x 0.454 = kg/min)

All foams produced appeared to be similarly fine celled and of approximately the same physical strength at all methylene chloride levels. Various characteristics of the foams are shown in the following Table II. Overall, the machine processing results of Table I and the various physical characteristics of Table II indicate that the fluorocarbon/methylene chloride blend system can function as a viable blowing agent for rigid polyisocyanurate foams. In all cases closed cell content was high and friabilities good. Compressive strength at the yield point of the foams decreased as the methylene chloride content increased but is probably dependent on the foam's density which also decreased as the methylene chloride content increased. It is also apparent from Table II that with various reactivity profiles the produced foams showed no significant differences in physical properties. The Table II results show no significant change in oxygen index up to a methylene chloride level of 20%. At 30% and 40%, the methylene chloride foams show some decrease in oxygen index. The insignificance of this decrease is made evident from the full scale fire testing described in the following Example 2.

Table III below summarizes dimensional stability data determined for the foam products. Despite the known solvating effect of methylene chloride on foam products, the dimensional stability testing surprisingly shows that maximum linear growth of the foam samples under various conditions was not adversely affected, in general, by the presence of methylene chloride. Only at the upper level of 40% methylene chloride is there an adverse effect. Most unexpectedly, the data indicates that at the 20 and 30% levels, methylene chloride even contributes to an improvement in dimensional stability, with less linear growth occurring in the high temperature environments. Thermal conductivity data for the foams is shown in Table IV below.

The data collected reveals that those blends where approximately 20-30% of the fluorocarbon blowing agent is replaced by methylene chloride without any significant adverse effects constitute especially useful blowing mixtures of the invention.

TABLE II

POLYISOCYANURATE FOAM CHARACTERISTICS

| Foam | R-11/$CH_2Cl_2$ (Weight Ratio) | Cream Time (Sec) | Density[1] | Oxygen Index[2] | Closed Cell[3] (%) | Friability[4] (%) | Compressive Strength[5] | Maximum Linear Growth (%) |
|---|---|---|---|---|---|---|---|---|
| A | 100/0 | 15 | 1.82 | 26.92 | 90.87 | 6.53 | 38.1 | 3.50 |
| B | 100/0 | 19 | 1.82 | 26.50 | 89.89 | 11.20 | 36.7 | 3.34 |
| C | 100/0 | 28 | 1.91 | 26.88 | 91.11 | 13.66 | 36.8 | 2.98 |
| D | 90/10 | 15 | 1.78 | 26.63 | 90.75 | 8.58 | 37.4 | 3.42 |
| E | 90/10 | 19 | 1.76 | 26.88 | 90.86 | 14.08 | 37.8 | 3.35 |
| F | 90/10 | 29 | 1.77 | 26.75 | 91.54 | 15.15 | 34.0 | 3.24 |
| G | 80/20 | 15 | 1.78 | 26.43 | 91.45 | 11.99 | 28.8 | 2.87 |
| H | 80/20 | 20 | 1.77 | 26.88 | 90.96 | 14.69 | 28.8 | 2.83 |
| I | 80/20 | 30 | 1.74 | 27.13 | 89.83 | 17.43 | 23.2 | 2.85 |
| J | 70/30 | 15 | 1.68 | 25.75 | 91.29 | 13.31 | 27.4 | 2.48 |
| K | 70/30 | 19 | 1.68 | 26.00 | 90.89 | 14.66 | 29.4 | 2.54 |
| L | 70/30 | 30 | 1.67 | 25.75 | 90.50 | 8.80 | 27.0 | 2.97 |
| M | 60/40 | 16 | 1.69 | 25.25 | 90.97 | 10.85 | 24.0 | 4.21 |
| N | 60/40 | 19 | 1.69 | 25.75 | 90.85 | 14.71 | 24.8 | 4.08 |
| O | 60/40 | 30 | 1.69 | 25.75 | 90.05 | 17.26 | 23.2 | 5.28 |

## TABLE II Continued

## POLYISOCYANURATE FOAM CHARACTERISTICS

1. Units = pcf(factor x 0.01602 = $gm/cm^3$)
2. Flammability test conducted according to ASTM D-2863-70, except that a sample measuring ½" x ½" x 6" (1.27cm x 1.27cm x 15.24cm) was used.
3. According to ASTM Test Method D-2856-70.
4. According to ASTM Test Method C-421.
5. a. According to ASTM Test Method D-1621-73.
   b. Units = psi (factor x 0.0703 = $kg/cm^2$)

TABLE III

DIMENSIONAL STABILITY OF POLYISOCYANURATE FOAMS

| Foam | $R-11/CH_2Cl_2$ (Weight Ratio) | Condition | % Linear Growth At Day 1 | 3 | 7 | 14 | 21 | 28 | Maximum % | (Day) |
|---|---|---|---|---|---|---|---|---|---|---|
| B | 100/0 | 70°C/95% R.H. | 2.36 | 2.43 | 2.80 | 3.07 | 2.39 | 3.34 | 3.34 | (28) |
| | | 110°C | 1.26 | 1.67 | 1.79 | 2.02 | 2.01 | 2.19 | 2.19 | (28) |
| | | 125°C | 1.45 | 1.84 | 2.11 | 2.71 | 2.58 | 2.78 | 2.78 | (28) |
| | | 0°F (-17.8°C.) | - | - | - | - | - | - | 0.44 | (30) |
| E | 90/10 | 70°C/95% R.H. | 2.37 | 2.37 | 2.93 | 3.01 | 3.32 | 3.35 | 3.35 | (28) |
| | | 110°C | 1.27 | 1.71 | 1.84 | 2.07 | 2.19 | 2.17 | 2.19 | (21) |
| | | 125°C | 1.40 | 1.83 | 2.09 | 2.45 | 2.59 | 2.80 | 2.80 | (28) |
| | | 0°F (-17.8°C.) | - | - | - | - | - | - | 0.34 | (30) |
| H | 80/20 | 70°C/95% R.H. | 2.01 | 2.41 | 2.83 | 2.05 | 2.59 | 2.72 | 2.83 | (7) |
| | | 110°C | 1.05 | 1.67 | 1.75 | 1.87 | 1.91 | 1.99 | 2.16 | (28) |
| | | 125°C | 1.45 | 1.96 | 2.15 | 2.39 | 2.48 | 2.60 | 2.60 | (28) |
| | | 0°F (-17.8°C.) | - | - | - | - | - | - | 0.38 | (30) |
| K | 70/30 | 70°C/95% R.H. | 1.65 | 1.99 | 2.01 | 2.31 | 2.49 | 2.54 | 2.54 | (28) |
| | | 110°C | 0.83 | 1.31 | 1.44 | 1.50 | 1.54 | 1.60 | 1.60 | (28) |
| | | 125°C | 1.34 | 1.76 | 1.98 | 2.15 | 2.19 | 2.24 | 2.24 | (28) |
| | | 0°F (-17.8°C.) | - | - | - | - | - | - | 0.02 | (30) |
| N | 60/40 | 70°C/95% R.H. | 3.28 | 3.49 | 3.58 | 3.89 | 4.01 | 4.08 | 4.08 | (28) |
| | | 110°C | 1.24 | 1.72 | 1.86 | 1.89 | 1.93 | 1.87 | 1.93 | (21) |
| | | 125°C | 2.32 | 2.79 | 2.90 | 2.96 | 2.99 | 3.00 | 3.00 | (28) |
| | | 0°F (-17.8°C.) | - | - | - | - | - | - | 3.13 | (30) |

TABLE IV

THERMAL CONDUCTIVITY OF POLYISOCYANURATE FOAMS

| Foam | R-11/$CH_2Cl_2$ (Weight Ratio) | K-Factor[1] Initial[2] | $10^3$ | $20^3$ | $30^3$ | $60^3$ | $90^3$ | $120^3$ | $240^3$ | $360^3$ |
|---|---|---|---|---|---|---|---|---|---|---|
| B | 100/0 | 0.110 | 0.126 | 0.141 | 0.144[4] | 0.151 | 0.157 | 0.164 | 0.168 | 0.173 |
| E | 90/10 | 0.109 | 0.129 | 0.144 | 0.147[4] | 0.155 | 0.161 | 0.164 | 0.172 | 0.177 |
| H | 80/20 | 0.120 | 0.138 | 0.148 | 0.155 | 0.165 | 0.171 | 0.175 | 0.184 | 0.188 |
| K | 70/30 | 0.110 | 0.132 | 0.139 | 0.149 | 0.162 | 0.167 | 0.171 | 0.179 | 0.181 |
| N | 60/40 | 0.112 | 0.139 | 0.149 | 0.159 | 0.173 | 0.178 | 0.181 | 0.190 | 0.194 |

1. Units = Btu/hr-°F-$ft^2$ per inch (factor x 0.144 = W/m °K)
2. 24 hours after manufactured.
3. Days.
4. 32 day measurement.

EXAMPLE 2

This example illustrates by reference to Figure 1 of the drawings the production of structural laminates A to H of Table V below, utilizing as the blowing agent (a) the fluorocarbon monofluorotrichloromethane (R-11) and (b) a series of blowing agent mixtures of the invention having different weight ratios of monofluorotrichloromethane to methylene chloride ($CH_2Cl_2$).

The following quantities of the following ingredients were combined as indicated:

| Item | Ingredient | Parts by Weight |
|---|---|---|
| A | Polymethylene polyphenyl isocyanate | 277 |
| B | Blowing Agent (See Table V below) | |
| C | Diethylene glycol | 23 |
| D | L-5340 | 2.5 |
| E | Catalyst mixture of Example 1 | 12 |

Items A, B, and D were mixed with each other and placed in the tank 11. The weight percent of R-11 to $CH_2Cl_2$ and quantity of blowing agent used in the production of each structural laminate are presented in Table V. Item C was placed in the tank 12. Item E was placed in the tank 13. The apparatus 10 was provided with aluminum foil rolls 30, 31. The oven 35 was heated to a temperature of 150°-200° F (65.6°-93.3°C). The rolls 38, 39 were started, as well as the pumps 17, 18, and 19 to discharge the contents of the tanks 11, 12, 13 into the respective feed lines which carry the ingredients to the mixing head 29. The mixing head 29 deposited the foam forming mixture onto the lower substrate and both upper and lower substrates and foamable mixture were then conveyed into the oven 35 to produce laminated structural panels 55. The average chemical, i.e., foam-forming mixture, throughput, the structural laminate product thickness and the average production line speed for each production

run are presented in Table V. The cream time, firm time, and tack free time for each foam produced are also reported in Table V.

In the above syntheses, the polymethylene polyphenyl isocyanate is that supplied by the Upjohn Company under the trade name Code 047.

**TABLE V**

**BLOWING AGENT FORMULATIONS AND PROCESSING CONDITIONS**

| STRUCTURAL LAMINATE | A | B | C | D | E | F | G | H |
|---|---|---|---|---|---|---|---|---|
| R-11/$CH_2Cl_2$ (weight ratio) | 100/0 | 100/0 | 80/20 | 80/20 | 70/30 | 70/30 | 60/40 | 60/40 |
| Blowing Agent (parts by weight) | 55.2 | 55.2 | 52 | 52 | 49 | 49 | 48 | 48 |
| Average Chemical Throughput[1] | 81.4 | 81.4 | 81 | 81 | 81.4 | 81.4 | 81.4 | 81.4 |
| Product Thickness[2] | 1 | 2 | 1 | 2 | 1 | 2 | 1 | 2 |
| Average Line Speed[3] | 160 | 85 | 160 | 55 | 160 | 85 | 155 | 75 |
| Reactivity | | | | | | | | |
| Cream Time (sec) | 16 | 16 | 16 | 17 | 17 | 17 | 18 | 19 |
| Firm Time (sec) | 38 | 38 | 32 | 32 | 35 | 35 | 35 | 36 |
| Tack Free Time (sec) | 73 | 73 | 60 | 59 | 58 | 58 | 59 | 60 |

1. Units = lb/min (factor x 0.454 = kg/min).
2. Units = in (factor x 2.54 = cm).
3. Units = ft/min (factor x 30.48 = cm/min).

Table VI below lists various physical characteristics of the core foams of structural laminates A to H. The linear growth, compressive strength and friability data indicate that the blend blown foams are comparable to and in some cases better than the foams blown with the fluorocarbon monofluorotrichloromethane. Closed cell content of the blend blown foams is generally a little lower but not significantly so.

The oxygen index decreases slightly with increasing methylene chloride content. The insignificance of these small decreases can be seen from the full scale fire testing results reported in Table VII below. The structural laminates were tested in an 8 Foot (2.44 Meter) Corner Test and in the conventional ICBO Room Test. The 8 Foot (2.44 Meter) Corner Test is a 1/3 scale version of the well-known Factory Mutual (FM) 25 Foot (7.62 Meter) Building Corner Fire Test. This FM test is described in Example 2 of U. S. Patent No. 4,118,533. It has been found that there is a good correlation between results obtained in the 8 Foot (2.44 Meter) Corner Test and those obtained in the Factory Mutual 25 Foot (7.62 Meter) Corner Test. In the former corner test, the test structure is composed of steel panels, with an 8 foot (2.44 meter) high ceiling, a 16 foot (4.88 meter) long wall, and a 12 foot (3.66 meter) long wall. The structural laminates were attached to the walls and the ceiling of the test structure over the whole surface of the test structure, and the ignition source was a 70 lb. (31.8 kg) wood crib, placed 6 1/2 inches (16.5 cm) from each wall in the corner. After ignition, the crib is capable of generating temperatures over 1,000° F. (537.8°C) in the upper corner within five minutes. This temperature is sufficient to cause a self-propagating fire if the material being tested is susceptible to such a result. The sample material is judged to have passed the test if it does not support a self-propagating fire, which ultimately extends in the case of a failed material to

the end of the 16 foot (4.88 meter) and/or 12 foot (3.66 meter) wall. A radiometer with transducer is placed so as to measure the heat output of the burned sample.

The fire testing results presented in Table VII reveal no adverse effect caused by the presence of methylene chloride in the structural laminates. In fact, the radiometer readings are lower in the ICBO Room Test for the blend blown samples, suggesting a flame retardant capacity of the methylene chloride. Assessment of the smoke production and extent of damage in the Corner and ICBO Room Fire Tests reveals that the blend blown products are comparable and even in some cases superior to the fluorocarbon blown products. Most importantly, the blend blown foam products passed the ICBO Room Tests and gave off less heat in these tests than the product made with the conventional fluorocarbon blowing agent, indicating that, from the standpoint of thermal resistance, methylene chloride is eminently suitable to partially replace the fluorocarbon in the production of structural laminates.

The dimensional stability data presented in Table VIII below also indicate that the blend blown foam products are comparable or superior to the fluorocarbon blown product, again evidencing the superior properties of the methylene chloride blends of the invention. The insulation capacity of the blend blown foam products of the invention is demonstrated in the aged k-factor results given below in Table IX. The structural laminates were aged with the facers on. The facers were removed just prior to the k-factor testing. The good insulating ability of the foam products of the invention is especially evident in the results for the inventive products blown with the 20 and 30% methylene chloride blends.

TABLE VI

CORE FOAM CHARACTERISTICS

| Core Foam of Structural Laminate | $R\text{-}11/CH_2Cl_2$ (Weight Ratio) | Cream Time (sec) | Density[1] | Oxygen Index[2] | Closed Cell[3] (%) | Friability[4] (%) | Compressive Strength[5] @ 10% Deflection | Maximum Linear Growth (%) | Product Thickness[6] |
|---|---|---|---|---|---|---|---|---|---|
| A | 100/0 | 16 | 1.66 | 26.65 | 89.23 | 13.32 | 15.60 | 1.0 | 1 |
| C | 80/20 | 16 | 1.81 | 26.08 | 89.13 | 9.98 | 23.20 | 0.84 | 1 |
| E | 70/30 | 17 | 1.69 | 25.75 | 86.60 | 13.17 | 21.15 | 0.53 | 1 |
| G | 60/40 | 18 | 1.62 | 25.25 | 88.22 | 15.67 | 16.95 | 0.80 | 1 |
| B | 100/0 | 16 | 1.68 | 26.75 | 87.90 | 14.31 | 29.75 | 2.39 | 2 |
| D | 80/20 | 17 | 1.84 | 25.75 | 88.11 | 12.18 | 28.65 | 1.05 | 2 |
| F | 70/30 | 17 | 1.72 | 25.38 | 86.00 | 16.54 | 24.30 | 0.91 | 2 |
| H | 60/40 | 19 | 1.69 | 25.13 | 85.85 | 17.14 | 22.40 | 1.84 | 2 |

1. Units = pcf (factor x 0.01602 = $gm/cm^3$).
2. Flammability test conducted according to ASTM D-2863-70, except that a sample measuring ½" x ½" x 6" (1.27 cm x 1.27 cm x 15.24 cm) was used.
3. According to ASTM Test Method D-2856-70.
4. According to ASTM Test Method C-421.
5. a. According to ASTM Test Method D-1621-73.
   b. Units = psi (factor x 0.0703 = $kg/cm^2$).
6. Units = in (factor x 2.54 = cm).

TABLE VII

FLAMMABILITY OF STRUCTURAL LAMINATES

| STRUCTURAL LAMINATE | RESULT | RADIOMETER OUTPUT* | BTU/FT.$^2$SEC. (WATT/CM$^2$) |
|---|---|---|---|
| 8 FOOT (2.44 METER) CORNER TEST | | | |
| B | Pass | ** | - |
| D | Pass | 4.00 | 0.116 (0.132) |
| F | Pass | 4.00 | 0.116 (0.132) |
| H | Pass | 4.59 | 0.134 (0.152) |
| ICBO ROOM CORNER TEST | | | |
| B | Pass | 11.5 | 0.335 (0.380) |
| D | Pass | 9.9 | 0.288 (0.327) |
| F | Pass | 8.9 | 0.259 (0.294) |
| H | Pass | 11.0 | 0.320 (0.363) |

* Millivolts

** Radiometer malfunction, not available.

TABLE VIII

CORE FOAM DIMENSIONAL STABILITY

| Core Foam of Structural Laminate | $R-11/CH_2Cl_2$ (Weight Ratio) | Condition | % Linear Growth at Day 1 | 3 | 7 | 14 | 21 | 28 | Max. % | Day |
|---|---|---|---|---|---|---|---|---|---|---|
| A | 100/0 | 70°C/95% R.H. | .74 | .82 | .86 | .97 | .81 | 1.0 | 1.0 | 28 |
| | | 110°C | .21 | .31 | .38 | .36 | .43 | .31 | 0.43 | 21 |
| | | 125°C | .38 | .57 | .67 | .73 | .89 | .70 | .89 | 21 |
| | | 0°F (-17.8°C) | | .18 | | .07 | | .14 | .18 | 3 |
| B | 100/0 | 70°C/95% R.H. | 1.36 | 1.48 | 1.54 | 1.81 | 1.80 | 1.81 | 1.81 | 14 |
| | | 110°C | .31 | .53 | .76 | .89 | 1.07 | 1.02 | 1.07 | 21 |
| | | 125°C | .75 | 1.19 | 1.70 | 2.08 | 2.39 | 2.26 | 2.39 | 21 |
| | | 0°F (-17.8°C) | | .09 | | .10 | | .21 | .21 | 28 |
| C | 80/20 | 70°C/95% R.H. | .59 | .68 | .71 | .76 | .75 | .84 | .84 | 28 |
| | | 110°C | .25 | .36 | .42 | .43 | .52 | .43 | .52 | 21 |
| | | 125°C | .31 | .41 | .48 | .47 | .61 | .42 | .61 | 21 |
| | | 0°F (-17.8°C) | | .18 | | .14 | | .13 | .18 | 3 |
| D | 80/20 | 70°C/95% R.H. | .72 | .78 | .78 | .88 | .83 | .87 | .88 | 14 |
| | | 110°C | .16 | .26 | .40 | .42 | .55 | .47 | .55 | 21 |
| | | 125°C | .38 | .58 | .73 | .87 | 1.05 | .90 | 1.05 | 21 |
| | | 0°F (-17.8°C) | | .08 | | .10 | | .26 | .26 | 28 |

TABLE VIII Continued

CORE FOAM DIMENSIONAL STABILITY

| Core Foam of Structural Laminate | $R\text{-}11/CH_2Cl_2$ (Weight Ratio) | Condition | % Linear Growth at Day | | | | | | Max. % | Day |
|---|---|---|---|---|---|---|---|---|---|---|
| | | | 1 | 3 | 7 | 14 | 21 | 28 | | |
| E | 70/30 | 70°C/95% R.H. | .37 | .45 | .47 | .48 | .50 | .53 | .53 | 28 |
| | | 110°C | .18 | .23 | .23 | .25 | .29 | .18 | .29 | 21 |
| | | 125°C | .28 | .33 | .38 | .37 | .53 | .37 | .53 | 21 |
| | | 0°F (-17.8°C) | | .04 | | .04 | | .08 | .08 | 28 |
| F | 70/30 | 70°C/95% R.H. | .78 | .76 | .81 | .91 | .82 | .87 | .91 | 14 |
| | | 110°C | .21 | .28 | .36 | .40 | .47 | .39 | .47 | 21 |
| | | 125°C | .34 | .45 | .51 | .56 | .71 | .53 | .71 | 21 |
| | | 0°F (-17.8°C) | | .01 | | .08 | | .02 | .08 | 14 |
| G | 60/40 | 70°C/95% R.H. | .52 | .63 | .63 | .63 | .63 | .71 | .71 | 28 |
| | | 110°C | -.64 | -.56 | -.62 | -.58 | -.54 | -.66 | -.66 | 28 |
| | | 125°C | .56 | .62 | .66 | .66 | .80 | .67 | .80 | 21 |
| | | 0°F (-17.8°C) | | .06 | | .13 | | .26 | .26 | 28 |
| H | 60/40 | 70°C/95% R.H. | 1.20 | 1.33 | 1.46 | 1.72 | 1.59 | 1.66 | 1.72 | 14 |
| | | 110°C | .75 | .96 | 1.23 | 1.34 | 1.45 | 1.32 | 1.45 | 21 |
| | | 125°C | 1.20 | 1.44 | 1.59 | 1.64 | 1.84 | 1.65 | 1.84 | 21 |
| | | 0°F (-17.8°C) | | .16 | | .27 | | .26 | .27 | 14 |

TABLE IX

AGED K-FACTOR*

| Structural Laminate | $R-11/CH_2Cl_2$ (Weight Ratio) | Initial | 30 Day | 60 Day | 90 Day | 180 Day |
|---|---|---|---|---|---|---|
| A | 100/0 | 0.120 | 0.124 | 0.120 | 0.125 | 0.130 |
| C | 80/20 | 0.115 | 0.119 | 0.124 | 0.125 | 0.129 |
| E | 70/30 | 0.124 | 0.123 | 0.127 | 0.132 | 0.138 |
| G | 60/40 | 0.128 | 0.127 | 0.131 | 0.135 | 0.141 |
| B | 100/0 | | 0.114 | 0.120 | 0.124 | 0.127 |
| D | 80/20 | | 0.110 | 0.120 | 0.127 | 0.133 |
| F | 70/30 | | 0.119 | 0.122 | 0.133 | 0.134 |
| H | 60/40 | | 0.129 | 0.136 | 0.144 | 0.151 |

*Units = Btu/hr-°F-$ft^2$ per inch (factor x 0.144 = W/m °K).

Whereas the present invention has been described with respect to specific embodiments thereof, it should be understood that the invention is not limited thereto as many modifications thereof may be made. It is, therefore, contemplated to cover by the present application any and all such modifications as fall within the true spirit and scope of the appended claims.

CLAIMS

1. A process for producing a polyisocyanurate foam characterized by comprising reacting together under foam-forming conditions an organic polyisocyanate, a polyol, a trimerization catalyst, and a blowing agent which comprises a mixture of

(a) methylene chloride and

(b) a fluorocarbon blowing agent which comprises a halogen-substituted hydrocarbon containing at least one fluorine atom or a mixture of halogen-substituted hydrocarbons containing at least one fluorine atom, said methylene chloride comprising up to about 40 weight percent of said blowing agent mixture, the remainder of said blowing agent mixture comprising said fluorocarbon blowing agent.

2. The process of claim 1, characterized in that said organic polyisocyanate is a polymethylene polyphenylisocyanate, said polymethylene polyphenylisocyanate preferably being a mixture of components of the formula

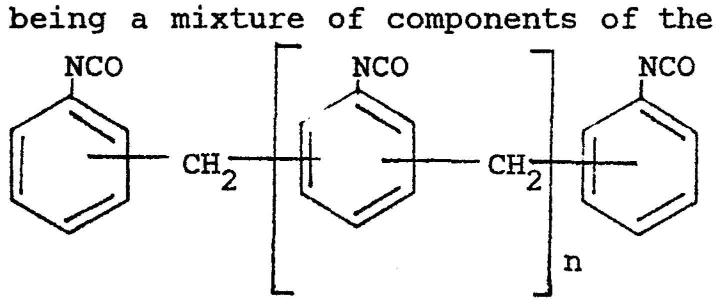

wherein n is an integer from 0 to 8 inclusive, and said mixture has:

(a) a functionality of 2.1 to 3.2,

(b) an equivalent weight between 120 and 180, and

(c) a viscosity at 25° C. between 150 and 2500 centipoises, and the equivalent ratio of said polymethylene polyphenylisocyanate to said polyol is about 1.5:1 to 6:1.

3. The process of either one of the preceding claims, characterized in that said polyol is a diol

having an equivalent weight of about 30 to 75, said polyol preferably being diethylene glycol.

4. The process of any one of the preceding claims, characterized in that said fluorocarbon blowing agent is a fluorinated alkane or a mixture of fluorinated alkanes, said blowing agent preferably being a chlorofluoroalkane or a mixture of chlorofluoroalkanes.

5. The process of any one of the preceding claims, characterized in that said methylene chloride comprises about 20 to 30 weight percent of the blowing agent mixture, the remainder of said mixture comprising said fluorocarbon blowing agent, said fluorocarbon blowing agent preferably being dichlorodifluoromethane, trichlorofluoromethane, dichlorotetrafluoroethane, or trichlorotrifluoroethane.

6. The process of claim 1, characterized by comprising reacting together under foam-forming conditions

(a) an organic polyisocyanate which is a mixture of components of the formula

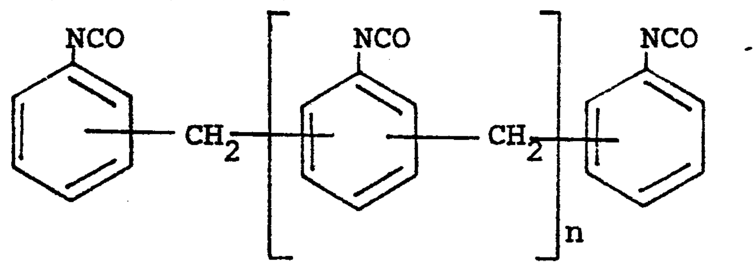

wherein n is an integer from 0 to 8 inclusive, and said mixture has:

(i) a functionality of 2.1 to 3.2,

(ii) an equivalent weight between 120 and 180, and

(iii) a viscosity at 25° C. between 150 and 2500 centipoises,

(b) a diol having an equivalent weight of about 30 to 75, said diol preferably being diethylene glycol,

(c) a trimerization catalyst,

(d) a silicone surfactant, and

(e) a blowing agent which is a mixture of methylene chloride and trichlorofluoromethane, said methylene chloride comprising about 20 to 30 weight percent of said blowing agent mixture, and said blowing agent mixture comprising about 1 to 30 weight percent of the resultant polyisocyanurate foam.

7. The process of any one of the preceding claims, characterized in that said trimerization catalyst comprises a mixture of a tertiary amino phenol and an alkali metal carboxylate, said trimerization catalyst preferably being a mixture of 2,4,6-tris(dimethylaminomethyl) phenol and potassium-2-ethyl hexoate in an equivalent ratio of about .4:1 to 2.5:1.

8. The process of any one of the preceding claims, characterized in that said methylene chloride comprises about 25 weight percent of said blowing agent mixture.

9. A polyisocyanurate foam characterized by being made in accordance with the process according to any of the preceding claims.

10. A laminate having at least one facing sheet and having an optionally glass fiber reinforced polyisocyanurate foam adhering to the facing sheet, characterized in that the polyisocyanurate foam is as defined in claim 9.

0096222

1 / 1

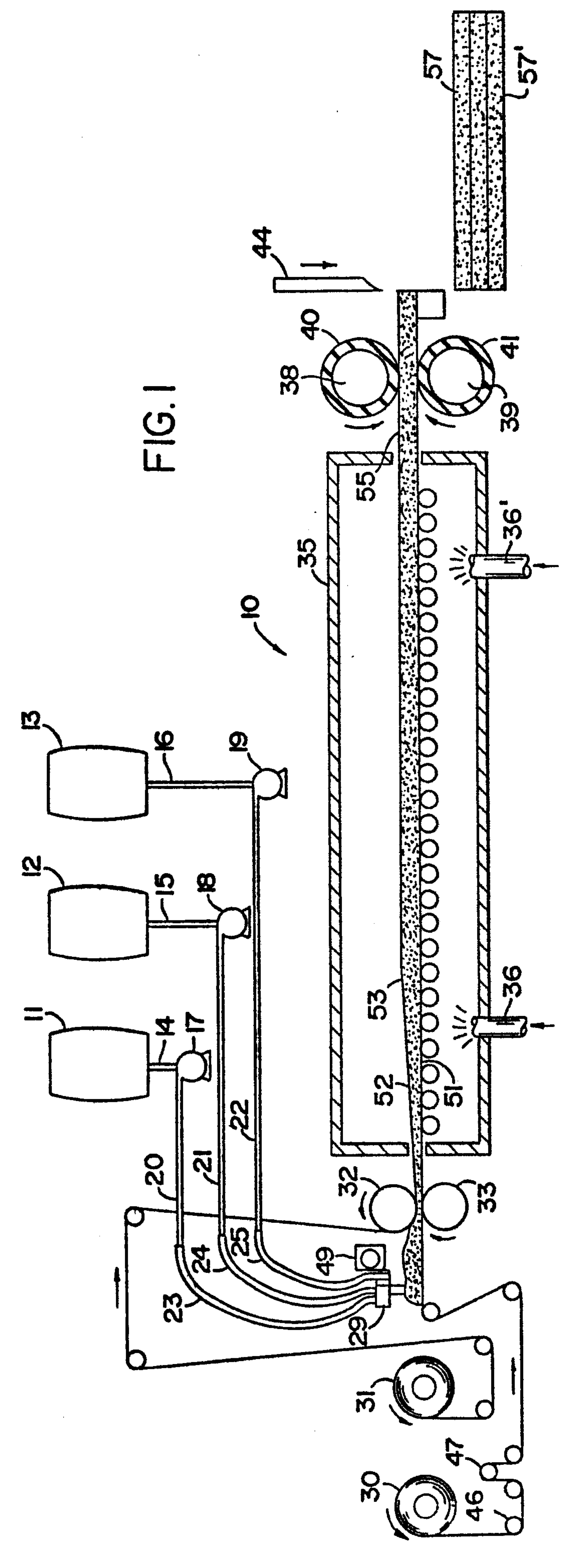


FIG.1

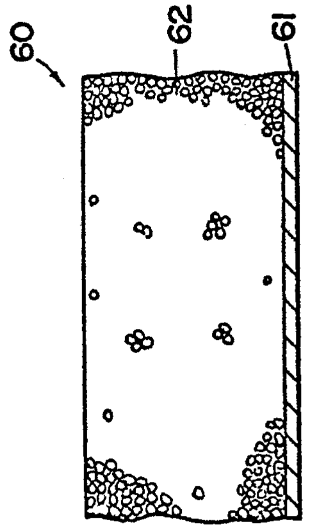


FIG.2

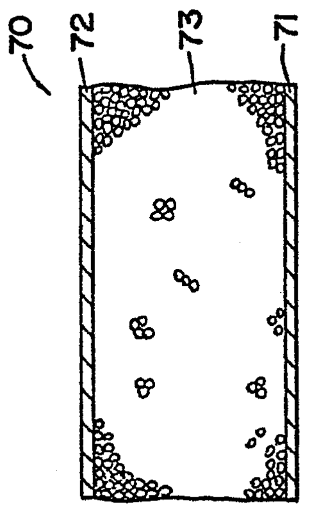


FIG.3